# EUROPÄISCHE PATENTSCHRIFT

(11) **EP 3 606 848 B1**
(45) Veröffentlichungstag und Bekanntmachung des Hinweises auf die Patenterteilung: **02.08.2023**
(21) Anmeldenummer: 18702986.3
(22) Anmeldetag: 01.02.2018
(51) Int. Cl.: B65G 15/40, B65G 43/08, B65G 23/44

(54) **TASCHENFÖRDERGURTANLAGE**
POUCH CONVEYOR BELT SYSTEM
CONVOYEUR À BANDE À POCHES

(30) Priorität: 07.04.2017 DE 102017205961
(43) Veröffentlichungstag der Anmeldung: 12.02.2020
(73) Patentinhaber: ContiTech Transportbandsysteme GmbH, 30165 Hannover (DE)
(72) Erfinder: BEHRENS, Carsten, 37434 Bilshausen (DE); KLUTH, Olaf, 30419 Hannover (DE); SCHLOMSKI, Jens, 37115 Duderstadt (DE)
(74) Vertreter: Continental Corporation
(86) Internationale Anmeldenummer: PCT/EP2018/052464
(87) Internationale Veröffentlichungsnummer: WO 2018/184750

(56) Entgegenhaltungen:
- WO-A1-00/21865
- WO-A1-03/093149
- WO-A1-2016/000876
- DE-A1-102005 037 117
- DE-U1-202014 010 433
- US-A- 4 296 855

## Beschreibung

Die vorliegende Erfindung betrifft eine Taschenfördergurtanlage mit einem Taschenfördergurt gemäß des Patentanspruchs 1.

Auf dem Gebiet der Fördertechnik ist ein Fördergurttyp namens SICON^{®} bekannt, welcher beispielsweise in der EP 0 286 637 B1 beschrieben wird. Ein SICON-Fördergurt weist in Längsrichtung, d.h. in Bewegungsrichtung des Fördergurts, zwei Stahlseile als Zugträger auf, welche jeweils in den beiden seitlichen Randbereichen in Längsrichtung einvulkanisiert sind. Die Randbereiche können auch als Fördergurtkanten bezeichnet werden, welche im Betrieb im geschlossenen Zustand des SICON-Fördergurts übereinander geführt werden. Die beiden Randbereiche weisen um die Stahlseile herum Profile auf, welche von entsprechenden Rollen einer Fördergurtanlage im Wesentlichen gemeinsam geführt werden können, so dass der Fördergurt nach unten hängend gehalten werden kann. Diese Rollen haben die Funktion, die Randbereiche zueinander zu führen und dabei aneinander zu drücken, weshalb sie auch als Laufrollen, Führungsrollen oder Spannrollen bezeichnet werden können. Ggfs. können einzelne oder alle Rollen zusätzlich angetrieben werden, um den SICON-Fördergurt in der Förderrichtung zu bewegen.

Auf diese Weise kann ein SICON-Fördergurt zum geschlossenen Transport von losem Fördergut taschenartig zusammengeklappt werden, so dass die beiden Randbereiche übereinander liegend geführt werden können. Die dazwischenliegende Fläche des SICON-Fördergurts hängt dabei frei nach unten und trägt das Fördergut geschlossen in sich. Ein SICON-Fördergurt kann daher auch als Taschenfördergurt oder Taschenförderer bezeichnet werden. Durch entsprechende Führungen kann der SICON-Fördergurt an den Aufgabe- und Abgabestellen geöffnet und geschlossen werden.

Vorteilhaft ist bei SICON-Fördergurten, dass der SICON-Fördergurt bzw. die entsprechende SICON-Fördergurtanlage einen geringen Platzbedarf aufweist und somit in engen Situationen eingesetzt werden kann. Dies gilt auch für die Überwindung von Höhenunterschieden in engen Situationen. Dabei können üblicherweise Höhenunterschiede bei taschenförmig geschlossenem SICON-Fördergurt mit Steigungen bis zu ca. 35° überwunden werden, indem das Fördergut innerhalb der Tasche bzw. des Bags zusammengedrückt und hierdurch kraftschlüssig gehalten werden kann.

Bei einem intensiven Betrieb einer SICON-Fördergurtanlage unter hoher Belastung kann es dabei zu einem Temperaturanstieg im SICON-Fördergurt insbesondere im Bereich der Randbereiche kommen, welche durch die Rollen der SICON-Fördergurtanlage kontaktiert und zusammengedrückt werden. Diese Erwärmung kann durch Druck, durch Reibung, durch den Wärmeübergang des Schüttguts und bzw. oder durch Strahlungswärme aus der Umgebung erzeugt werden. Dies kann insbesondere dann der Fall sein, falls die Einstellung der Rollen nicht optimal ist und bzw. oder diese einen mechanischen Schaden aufweisen, der zu einem erhöhten Laufwiderstand der Rolle und somit zu einem lokalen Ausfall des rollenden Lastabtrags (Gewicht des Gurtes und des Fördergutes) in die Trageinheit führen kann.

Dieser Temperaturanstieg ist als nachteilig anzusehen, da es hierdurch zu einer Belastung des Fördergurts kommen kann, welche zu erhöhtem Verschleiß und frühzeitiger Alterung des Fördergurts führen kann. Dies kann ebenfalls gelten, falls ein Fördergurt bei niedrigen Temperaturen aus dem Stillstand in einem kurzen Zeitraum auf Betriebslast beansprucht wird.

Die WO 2016/000876 A1 beschreibt eine Förderanlage zum Fördern von wenigstens einem Fördergut mit einem endlos umlaufenden Förderer, wobei der Förderer ein Taschenfördergurt ist, mit wenigstens einem am oder im Förderer angeordneten Transponder, bevorzugt RFID-Transponder, und mit wenigstens einer Kommunikationseinrichtung zum drahtlosen Übertragen von Daten an den Transponder und bzw. oder zum drahtlosen Auslesen von im Transponder gespeicherten Daten. Die WO 2016/000876 A1 offenbart die Merkmale des Oberbegriffs des Anspruchs 1.

Die WO 03/093149 A1 beschreibt einen Bandförderer, umfassend ein endloses, gekrümmtes Förderband, das mindestens ein zugkraftabsorbierendes Element entlang der Länge des Förderbandes und ein bandtragendes Element an jeder Längskante des Förderbandes aufweist, Stützrollen, die mittels der bandtragenden Elemente das Förderband über dessen Weg stützen, und mindestens ein erstes und ein zweites Antriebspaket, die jeweils mit mindestens einer Antriebsrolle versehen sind, die geeignet ist, eine Zugkraft auf das zugkraftabsorbierende Element zu übertragen, dass die Zugkräfte des ersten und des zweiten Antriebspaketes individuell steuerbar sind, und dass der Bandförderer ferner eine am ersten Antriebspaket vorgesehene Detektionseinrichtung, die geeignet ist, die Bandspannung in dem dem Antriebspaket benachbarten Förderband zu erfassen, und eine Steuereinrichtung zur individuellen Steuerung der Zugkraft des ersten Antriebspaketes in Abhängigkeit von einer mit Hilfe der Detektionseinrichtung erfassten Änderung der Bandspannung aufweist, um die Bandspannung auf der Austrittsseite des ersten Antriebspaketes über einem vorgegebenen Mindestwert zu halten.

Die DE 10 2005 037 117 A1 beschreibt ein Überwachungssystem für einen Bandförderer, beinhaltend: Einen Transponder eines Bandförderers, der Informationen zur SelbstIdentifikation aufweist, welche durch externe Energie übertragen werden; - Messmittel eines Bandförderers, die Informationen zur Selbstidentifikation aufweisen und zur Messung von wenigstens Temperatur und bzw. oder Druck ausgebildet sind, um den gemessenen Wert mit den Informationen zur Selbstidentifikation zu übertragen; - Einen Sender/Empfänger, beabstandet vom Bandförderer, um elektrische Wellen von dem Transponder zu empfangen, welche Träger des Messwerts und der Informationen zur Selbstidentifikation von dem Transponder und den Messmitteln sind; und - Einen Datenprozessor, der mit dem Sender/Empfänger zum Empfang der Informationen zur Selbstidentifikation und des Messwerts, die von dem Transponder und den Messmitteln gesendet werden, verbunden ist, um eine Abnormalität in der Gestalt des Bandförderers und/oder in der Temperatur und bzw. oder im Druck festzustellen.

Eine Aufgabe der vorliegenden Erfindung ist es, eine Taschenfördergurtanlage der eingangs beschriebenen Art bereit zu stellen, so dass ein Temperaturanstieg des Taschenfördergurts vermieden oder zumindest reduziert werden kann. Zumindest soll eine alternative Taschenfördergurtanlage bereitgestellt werden.

Die Aufgabe wird erfindungsgemäß durch eine Taschenfördergurtanlage mit den Merkmalen gemäß Patentanspruch 1 gelöst. Vorteilhafte Weiterbildungen sind in den Unteransprüchen beschrieben.

Die vorliegende Erfindung betrifft somit eine Taschenfördergurtanlage mit einem Taschenfördergurt mit einem Fördergurtkörper, vorzugsweise mit einem elastomeren Fördergurtkörper, welcher ausgebildet ist, ein Fördergut im Innenraum des geschlossenen Taschenfördergurts aufzunehmen. Ein derartiges Fördergut kann vorzugsweise ein Schüttgut sein.

Der Taschenfördergurt der erfindungsgemäßen Taschenfördergurtanlage ist dadurch gekennzeichnet, dass der Fördergurtkörper wenigstens ein Sensorelement aufweist, welches ausgebildet ist, wenigstens die Temperatur des Fördergurtkörpers an der Stelle des Sensorelements zu erfassen. Das Sensorelement wird im Folgenden näher beschrieben.

Dabei ist das Sensorelement vorzugsweise dort in oder an dem Fördergurtkörper angeordnet, wo besonders hohe Temperaturen z.B. durch Druckbelastungen des Materials des Taschenfördergurts auftreten können. Auf diese Art und Weise kann eine maximale Temperatur des Taschenfördergurts erfasst werden. Hierbei kann die Temperatur als kontinuierlicher Wert oder zu diskreten Zeitpunkten erfasst werden. Auch können ein aktueller Temperaturwert oder der Verlauf einer Temperatur betrachtet werden.

Die Kenntnis der Temperatur kann erfindungsgemäß dazu verwendet werden, eine Taschenfördergurtanlage, in welcher der erfindungsgemäße Taschenfördergurt genutzt werden kann, in Abhängigkeit der erfassten Temperatur des Taschenfördergurts derart betrieben zu können, dass ein Anstieg der Temperatur des Taschenfördergurts vermieden oder zumindest reduziert werden kann. Dies wird im Folgenden näher erläutert werden.

Erfindungsgemäß weist der Fördergurtkörper eine erste Fördergurtkante und eine zweite Fördergurtkante auf, wobei das wenigstens eine Sensorelement in der ersten Fördergurtkante und bzw. oder in der zweiten Fördergurtkante angeordnet ist. Hierdurch kann die Temperatur über das Sensorelement bzw. die Sensorelemente möglichst dort erfasst werden, wo die größten Druckbelastungen im Betrieb auf den Taschenfördergurt wirken können und somit die größte druckbedingte Temperaturerhöhung zu erwarten ist.

Erfindungsgemäß weist der Fördergurtkörper ein Elastomermaterial auf oder besteht aus einem Elastomermaterial, in welches zumindest abschnittsweise im Bereich der ersten Fördergurtkante und bzw. oder der zweiten Fördergurtkante ein Festigkeitsträger und bzw. oder ein Zugträger eingebettet ist, wobei das wenigstens eine Sensorelement zwischen dem Festigkeitsträger und bzw. oder zwischen dem Zugträger und einer Außenseite der Fördergurtkante angeordnet ist, welche ausgebildet ist, einer Rolle der Taschenfördergurtanlage zugewandt zu sein. Durch diese Anordnung kann die Temperatur über das Sensorelement möglichst dort erfasst werden, wo die größten Druckbelastungen im Betrieb auf den Taschenfördergurt wirken können und somit die größte druckbedingte Temperaturerhöhung zu erwarten ist. Dies kann gerade in diesem Bereich der Fördergurtkante der Fall sein, weil dieser Bereich im Betrieb von der Rolle in der Querrichtung mit Druck beaufschlagt werden kann. Dies kann zum einen durch ein seitliches Anpressen der profillosen Seite der oberen Fördergurtkante durch eine Rolle erfolgen. Zum anderen kann eine schräge Seite der Profilierung der unteren Fördergurtkante auf einer Rolle aufliegen, so dass durch das Gewicht ein Druck ausgeübt werden kann.

Als Festigkeitsträger einer Fördergurtkante kann vorzugsweise ein Gewebe verwendet werden, so dass Kräfte über das Gewebe flächig übertragen werden können, so dass Druckbelastungen auf das Elastomermaterial flächig gleichmäßiger verteilt und hierdurch reduziert werden können, was die Lebensdauer der Fördergurtkante erhöhen kann.

Als Zugträger können insbesondere Stahlseile verwendet werden, welche sich geschlossen in der Laufrichtung erstrecken und die Zugkräfte des Taschenfördergurts aufnehmen. Gemäß einem weiteren Aspekt der vorliegenden Erfindung weist die erste Fördergurtkante und bzw. oder die zweite Fördergurtkante ein Profil auf, welches zur Führung zwischen den Rollen der Taschenfördergurtanlage ausgebildet ist, wobei wenigstens ein Sensorelement in der ersten Fördergurtkante und bzw. oder in der zweiten Fördergurtkante auf der Höhe des Profils angeordnet ist. Durch diese Anordnung kann die Temperatur über das Sensorelement möglichst dort erfasst werden, wo die größten Druckbelastungen im Betrieb auf den Taschenfördergurt wirken können und somit die größte druckbedingte Temperaturerhöhung zu erwarten ist. Dies ist dadurch begründet, dass die Profile im Betrieb von den Rollen der Taschenfördergurtanlage gedrückt werden und es somit im Bereich der Profile zu höheren Temperaturen als im übrigen Taschenfördergurt kommen kann (Walkarbeit). Dies gilt insbesondere dann, falls ein Zugträger einer Fördergurtkante des Taschenfördergurts wie z.B. ein Stahlseil zur Übertragung von Zugkräften in der Bewegungsrichtung des Taschenfördergurts in der Höhe mittig innerhalb des Profils angeordnet ist, so dass das Sensorelement in der Querrichtung zwischen dem Zugträger und einer Rolle der Taschenfördergurtanlage angeordnet sein kann. Da das Material der Fördergurtkante zwischen dem Zugträger und der Rolle vergleichsweise stark gedrückt werden kann, kann hier auch die größte Temperaturentwicklung auftreten und durch das Sensorelement erfasst werden.

Gemäß einem weiteren Aspekt der vorliegenden Erfindung weist der Fördergurtkörper eine Mehrzahl von Sensorelementen auf, welche in der Bewegungsrichtung des Taschenfördergurts zueinander, vorzugsweise gleichmäßig, beabstandet sind. Hierdurch kann die Temperatur des Taschenfördergurts an mehreren Stellen sensorisch erfasst werden. Dies kann Aussagen über die Temperaturen an diesen Stellen der Taschenfördergurts ermöglichen. Ferner kann eine Taschenfördergurtanlage schneller auf die Temperatur des Taschenfördergurts eingestellt werden, weil die Temperatur häufiger dadurch erfasst werden kann, dass z.B. an derselben Stelle der Taschenfördergurtanlage Sensorelemente des vorbeibewegenden Taschenfördergurts in geringeren Zeitabständen erfasst werden können.

Gemäß einem Aspekt der vorliegenden Erfindung weist das Sensorelement einen Transponder-Chip, vorzugsweise einen RFID-Transponder-Chip, auf oder ist als solcher ausgebildet, wobei der Transponder-Chip ausgebildet ist, Daten drahtlos von einer Sendeeinheit einer Taschenfördergurtanlage zu empfangen und bzw. oder Daten drahtlos an eine Empfangseinheit einer Taschenfördergurtanlage zu senden. Auf diese Art und Weise kann eine drahtlose Datenübertragung in eine Richtung oder vorzugsweise in beide Richtungen erfolgen, um die Temperatur des Sensorelements als Daten drahtlos von dem Sensorelement zu erhalten, so dass auf eine störende Verkabelung zwischen der Taschenfördergurtanlage und dem beweglichen Taschenfördergurt verzichtet werden kann. Durch die Datenübertragung zum Sensorelement hin kann dieses mit Befehlen angesteuert und z.B. zum Senden der Temperaturdaten aufgefordert werden.

Gemäß einem weiteren Aspekt der vorliegenden Erfindung ist das Sensorelement ausgebildet, elektrische Energie drahtlos von einer Energie-Übertragungseinheit einer Taschenfördergurtanlage zu erhalten, und bzw. oder das Sensorelement weist einen, vorzugsweise aufladbaren, elektrischen Energiespeicher auf und bzw. oder das Sensorelement ist ausgebildet, elektrische Energie, vorzugsweise piezoelektrisch, zu erzeugen. Auf jede dieser Arten und Weisen, welche einzeln oder miteinander kombiniert eingesetzt werden können, kann die Energieversorgung des Sensorelements erreicht werden, damit das Sensorelement seine Funktion ausüben kann.

Gemäß einem weiteren Aspekt der vorliegenden Erfindung weist der Fördergurtköper zumindest im Bereich wenigstens eines Sensorelements zumindest abschnittsweise einen textilen Festigkeitsträger, vorzugsweise einen gewobenen textilen Festigkeitsträger, auf und das Sensorelement weist eine Sensorantenne, vorzugsweise eine Transponderantenne, auf, welche zumindest abschnittsweise mit dem textilen Festigkeitsträger verbunden, vorzugsweise verwoben, ist. Hierdurch kann die Sensorantenne definiert positioniert werden. Auch kann diese Positionierung der Sensorantenne während der Herstellung und im Betrieb sowie gerade bei auftretenden Druckbelastungen und bzw. oder elastischen Verformungen des Materials des Fördergurtkörpers beibehalten werden. Dies gilt auch für die Orientierung der Sensorantenne, welche einen Einfluss auf den Signalempfang bzw. auf die Signalaussendung der Sensorantenne haben kann.

Gemäß einem weiteren Aspekt der vorliegenden Erfindung ist das Sensorelement ferner ausgebildet, den Druck des Fördergurtkörpers an der Stelle des Sensorelements zu erfassen. Hierdurch kann auch diese Information erfasst und zum Betrieb einer Taschenfördergurtanlage genutzt werden, in der ein erfindungsgemäßer Taschenfördergurt eingesetzt wird. Auch kann hierdurch ein falsch eingestellter Druck einer Rolle erkannt bzw. der sensorisch erfasste Druck dazu verwendet werden, den Druck einer Rolle zu regeln anstelle zu steuern.

Gemäß einem weiteren Aspekt der vorliegenden Erfindung weist das Sensorelement ferner eine Identifikations-Kodierung auf, welche drahtlos von einer Fördergurtanlage, vorzugsweise drahtlos von einer Empfangseinheit einer Fördergurtanlage, erfasst werden kann. Hierdurch kann die erfasste Temperatur einem bestimmten und über seine Identifikations-Kodierung eindeutig identifizierbaren Sensorelement zugeordnet werden. Ist die Position dieses Sensorelements über die Länge des Taschenfördergurts bekannt, kann somit auch die erfasste Temperatur eindeutig einer konkreten Position des Taschenfördergurts zugewiesen werden.

Gemäß einem weiteren Aspekt der vorliegenden Erfindung weist der Fördergurtkörper eine Mehrzahl von Sensorelementen auf, welche in der Bewegungsrichtung des Taschenfördergurts zueinander, vorzugsweise gleichmäßig, beabstandet sind, wobei jedes Sensorelement eine individuelle Identifikations-Kodierung aufweist, welche drahtlos von einer Taschenfördergurtanlage, vorzugsweise drahtlos von einer Empfangseinheit einer Taschenfördergurtanlage, erfasst werden kann. Hierdurch können die Temperaturen des Fördergurtkörpers an mehreren Stellen entlang des Taschenfördergurts sensorisch erfasst und diesen Stellen jeweils eindeutig zugeordnet werden.

Die vorliegende Erfindung betrifft eine Taschenfördergurtanlage mit einer Mehrzahl von Rollen zur Führung eines Taschenfördergurts wie zuvor beschrieben, mit wenigstens einer Sendeeinheit, welche ausgebildet ist, Daten drahtlos an wenigstens das Sensorelement des Taschenfördergurts zu senden, und bzw. oder mit wenigstens einer Empfangseinheit, welche ausgebildet ist, Daten drahtlos von wenigstens dem Sensorelement des Taschenfördergurts zu empfangen, wobei die Taschenfördergurtanlage vorzugsweise eine kombinierte Sende-/Empfangseinheit aufweist. Auf diese Art und Weise können die zuvor beschriebenen Eigenschaften und Vorteile an einer Taschenfördergurtanlage genutzt werden.

Gemäß einem Aspekt der vorliegenden Erfindung weist die Taschenfördergurtanlage ferner wenigstens eine Energie-Übertragungseinheit auf, welche ausgebildet ist, elektrische Energie drahtlos an wenigstens ein Sensorelement des Taschenfördergurts zu übertragen. Hierdurch kann dieser zuvor beschriebene Aspekt an einer Taschenfördergurtanlage genutzt werden.

Gemäß einem weiteren Aspekt der vorliegenden Erfindung weist die Taschenfördergurtanlage ferner eine Mehrzahl von Sendeeinheiten, Empfangseinheiten, Sende-/Empfangseinheiten und bzw. oder Energie-Übertragungseinheiten auf, welche in der Förderrichtung zueinander beabstandet angeordnet sind. Hierdurch kann dieser zuvor beschriebene Aspekt an einer Taschenfördergurtanlage genutzt werden.

Erfindungsgemäß weist wenigstens eine Rolle, vorzugsweise weisen eine Mehrzahl von Rollen, eine Rollenspanneinheit auf, welche ausgebildet ist, wenigstens eine Rolle in einer Bewegungsrichtung der Rollenspanneinheit gegenüber dem Taschenfördergurt zu bewegen und hierdurch auf den Taschenfördergurt zu drücken, wobei die Taschenfördergurtanlage ausgebildet ist, den Druck der Rollenspanneinheit auf den Taschenfördergurt in Abhängigkeit einer Temperatur und bzw. oder in Abhängigkeit eines Drucks und bzw. oder in Abhängigkeit einer Identifikations-Kodierung des wenigstens einen Sensorelements oder einer Mehrzahl von Sensorelementen des Taschenfördergurts zu steuern und bzw. oder zu regeln. Auf diese Weise können diese Parameter einzeln oder in Kombination miteinander oder zusammen mit weiteren Informationen dazu verwendet werden, den Druck zu steuern und bzw. oder zu regeln, welcher durch wenigstens eine Rolle auf den Taschenfördergurt bzw. dessen Fördergurtkanten im Betrieb ausgeübt wird. Werden mehrere Rollen der Taschenfördergurtanlage auf diese Art und Weise gesteuert und bzw. oder geregelt, so können diese Rollen gleich oder unterschiedlich betrieben werden.

Erfindungsgemäß können einzelne zuvor beschriebene Aspekt eines Taschenfördergurts sowie einer Taschenfördergurtanlage dazu verwendet werden, der Taschenfördergurt bzw. die Taschenfördergurtanlage derart zu betreiben, so dass ein Temperaturanstieg des Taschenfördergurts vermieden oder zumindest reduziert werden kann. Dies kann z.B. durch eine temperatur- und ggfs. zusätzlich druckabhängige Einstellung von Betriebsparametern der Taschenfördergurtanlage wie z.B. den Abstand der Rollen zu den Fördergurtkanten bzw. den Druck der Rollen auf die Fördergurtkanten erreicht werden. Auch kann z.B. die Antriebsgeschwindigkeit des Taschenfördergurts alternativ oder zusätzlich als Betriebsparameter entsprechend eingestellt werden.

Hierdurch kann die maximale Temperatur begrenzt und das Erreichen von kritischen Temperaturen vermieden werden. Auch kann hierdurch ein schonendes Anfahren eines "kalten" Taschenfördergurts bis zu einer gewünschten Betriebstemperatur derart durchgeführt werden, dass eine langsamere Erwärmung als bisher bekannt erreicht werden kann. In beiden Fällen kann hierdurch das Material des Taschenfördergurts und insbesondere der Fördergurtkanten geschont werden, so dass Verschleiß und bzw. oder Alterung reduziert werden können. Auch können hierdurch Ausfälle vermieden werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Schnittdarstellung einer bekannten Taschenfördergurtanlage mit einem bekannten Taschenfördergurt;
- Fig. 2: eine schematische Draufsicht auf ein erfindungsgemäßes Sensorelement mit einem Festigkeitsträger eines erfindungsgemäßen Taschenfördergurts;
- Fig. 3: eine perspektivische schematische Schnittdarstellung einer erfindungsgemäßen Taschenfördergurtanlage mit dem erfindungsgemäßen Taschenfördergurt; und
- Fig. 4: eine weitere perspektivische schematische Schnittdarstellung der erfindungsgemäßen Taschenfördergurtanlage mit dem erfindungsgemäßen Taschenfördergurt.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

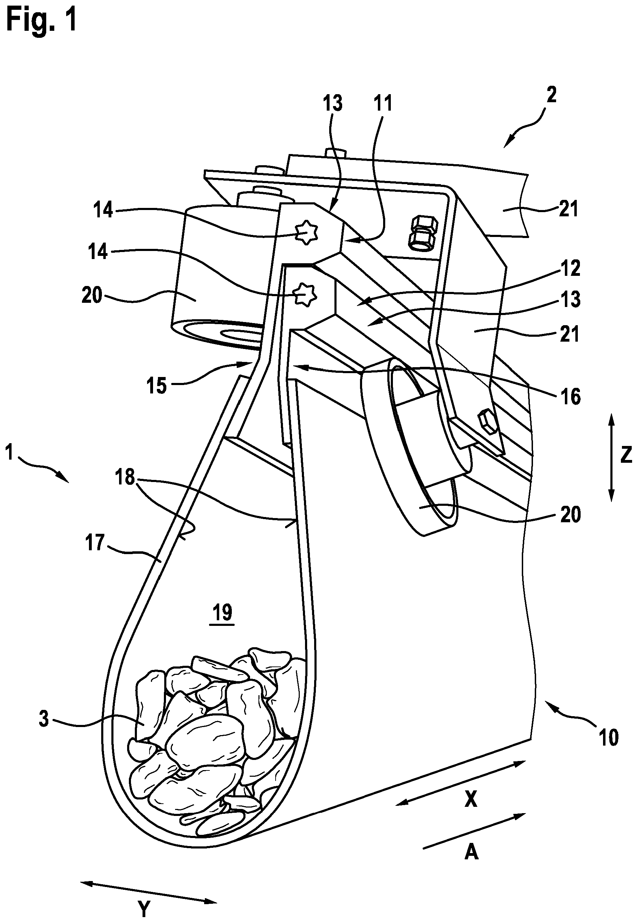

In der Figur 1 wird ein bekannter Taschenfördergurt 1 in einer bekannten Taschenfördergurtanlage 2 betrachtet. Der Taschenfördergurt 1 weist einen Fördergurtkörper 10 auf, welcher auch als Tasche 10 oder Bag 10 bezeichnet werden kann und aus einem Elastomermaterial ausgebildet ist. In der Querrichtung Y außenseitig weist der Fördergurtkörper 10 eine erste Fördergurtkante 11 und ein zweite Fördergurtkante 12 auf, welche im geschlossenen Zustand des Taschenfördergurts 1 übereinander angeordnet sind, so dass die erste Fördergurtkante 11 als obere Fördergurtkante 11 und die zweite Fördergurtkante 12 als untere Fördergurtkante 12 bezeichnet werden kann. Beide Fördergurtkanten 11, 12 weisen ein Profil 13 auf, welches dem Halt durch entsprechend angeordnete Rollen 20 der Taschenfördergurtanlage 2 dient. Innerhalb der beiden Fördergurtkanten 11, 12 verläuft jeweils ein Stahlseil 14 als Zugträger 14 in der Längsrichtung X geschlossen.

Die beiden Fördergurtkanten 11, 12 gehen nach unten in jeweils einen Kontaktbereich 15, 16 über, der auch als Fahne 15, 16 bezeichnet werden kann. Mit den Kontaktbereichen 15, 16 ist ein Taschenkörper 17 jeweils seitlich verbunden, auf dessen oberer Seite als Tragseite 18 ein Fördergut 3 wie z.B. ein Schüttgut 3 aufgenommen werden kann. Im geschlossenen Zustand umschließt die Tragseite 18 des Taschenkörpers 17 das Fördergut 3 in der Querrichtung Y und in der Höhe Z, so dass die Tragseite 18 dann auch als Innenseite 18 bezeichnet werden kann, welche einen Innenraum 19 des Taschenfördergurts 1 einschließt.

Die entsprechende Taschenfördergurtanlage 2 weist, wie bereits erwähnt, Rollen 20 auf, welche paarweise an Anlagenteilen 21 angeordnet sind, um die erste, obere Fördergurtkante 11 flächig in der Querrichtung Y und die zweite, untere Fördergurtkante 12 von schräg unten am Profil 13 zu halten. Dabei wird der Abstand der beiden Rollen 20 zueinander bzw. zu den Fördergurtkanten 11, 12 derart gewählt, so dass die Bewegung des Taschenfördergurts 1 in der Bewegungsrichtung A entlang der Längsrichtung X ermöglicht wird und gleichzeitig die Fördergurtkanten 11, 12 beim Durchlaufen des Paares von Rollen 20 sicher gehalten und geführt werden können.

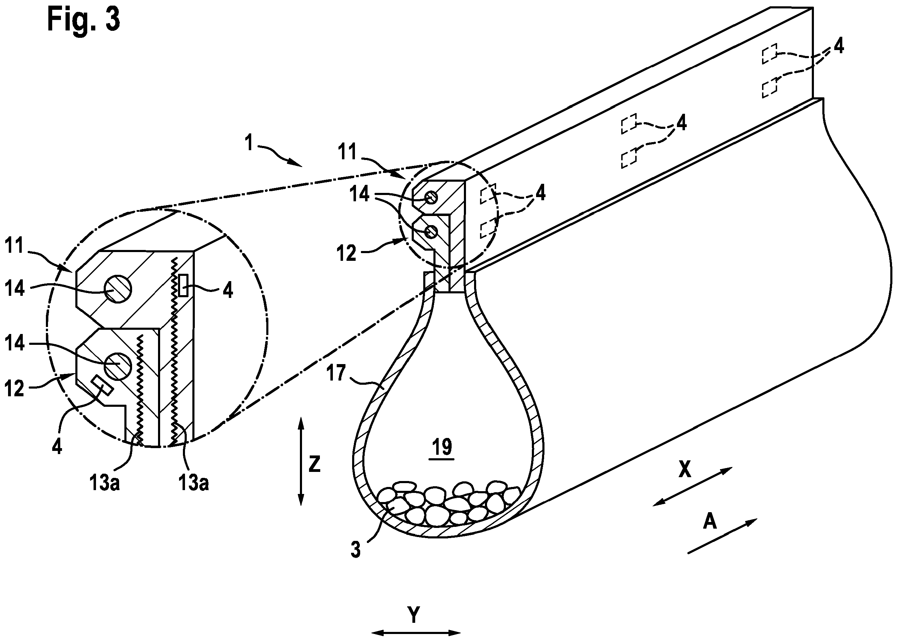

Da bei bekannten Taschenfördergurten 1 sowie bei bekannten Taschenfördergurtanlagen 2 aufgrund des Drucks der Rollen 20 auf die Fördergurtkanten 11, 12 Temperaturen auftreten können, welche unvorteilhaft für den Taschenfördergurt 1 sein können, wird erfindungsgemäß die Erfassung und Berücksichtigung der Temperatur insbesondere der Fördergurtkanten 11, 12 des Taschenfördergurts 1 beim Betrieb der Taschenfördergurtanlage 1 wie folgt vorgeschlagen:
Innerhalb der Fördergurtkanten 11, 12 ist jeweils eine Textilgewebelage 13a als Festigkeitsträger 13a in der Längsrichtung X geschlossen und in der Höhe Z abschnittsweise angeordnet, vgl. Figur 3, so dass Kräfte in der Querrichtung Y besser aufgenommen werden können. Mit diesem Festigkeitsträger 13a der ersten, oberen Fördergurtkante 11 ist ein Sensorelement 4 verbunden, so dass das Sensorelement 4 auf der Höhe Z des Zugträgers 4 in der Querrichtung Y zwischen dem Festigkeitsträger 13a und der Kontaktfläche der Fördergurtkante 11, 12 zur um die vertikale Richtung Z drehenden Rolle 20 angeordnet ist. Ein weiteres Sensorelement 4 ist in der zweiten, unteren Fördergurtkante 12 dort angeordnet, wo das Profil 13 von schräg unten von einer Rolle 20 gehalten wird.

Dieses Sensorelement 4 ist zwischen dieser Kontaktfläche und dem Zugträger 14 der unteren Fördergurtkante 12 angeordnet.

Hierdurch kann jeweils eine Temperatur genau dort erfasst werden, wo der größte Druck auf die Fördergurtkante 11, 12 ausgeübt wird und hierdurch auch die größte Temperatur hervorgerufen werden kann. Auf diese Art und Weise kann erfindungsgemäß die Temperatur in den beiden Fördergurtkanten 11, 12 erfasst und beim Betrieb des Taschenfördergurts 1 bzw. der Taschenfördergurtanlage 2 berücksichtigt werden.

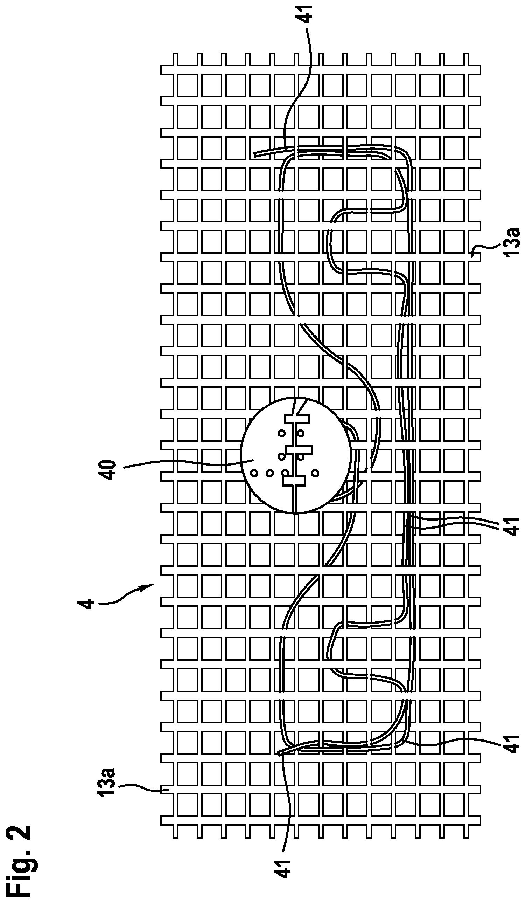

Um die Positionierung und insbesondere die Orientierung des Sensorelement 4 sicher zu definieren und sowohl innerhalb des Vulkanisationsprozesses als auch während des Betriebs beizubehalten, ist eine Sensorantenne 41 des Sensorelements 4 als länglicher Faden ausgeführt und dem als Gewebe ausgeführten Festigkeitsträger 13a mehrfach verwoben, vgl. Figur 2. Die Sensorantenne 41 ist mit einem Sensorkörper 40 verbunden, welcher alle elektronischen und sensorischen Bauteile des Sensorelements 4 aufweist und daher auch als Sensorelektronik 40 bezeichnet werden kann. Die Sensorelektronik 40 ist als RFID-Transponder-Chip ausgebildet, so dass Daten wie z.B. Befehle drahtlos von außerhalb empfangen und Daten wie z.B. Temperaturmesswerte drahtlos nach außerhalb gesendet werden können. Das Sensorelement 4 weist als Sensoren neben einem Temperatursensor auch einen Drucksensor auf, welcher ausgebildet und angeordnet, insbesondere orientiert ist, einen Druck in der Querrichtung Y zu erfassen. Das Sensorelement 4 weist ferner eine eindeutige Identifikations-Kodierung auf, welche ebenfalls als Daten drahtlos nach außerhalb gesendet werden kann.

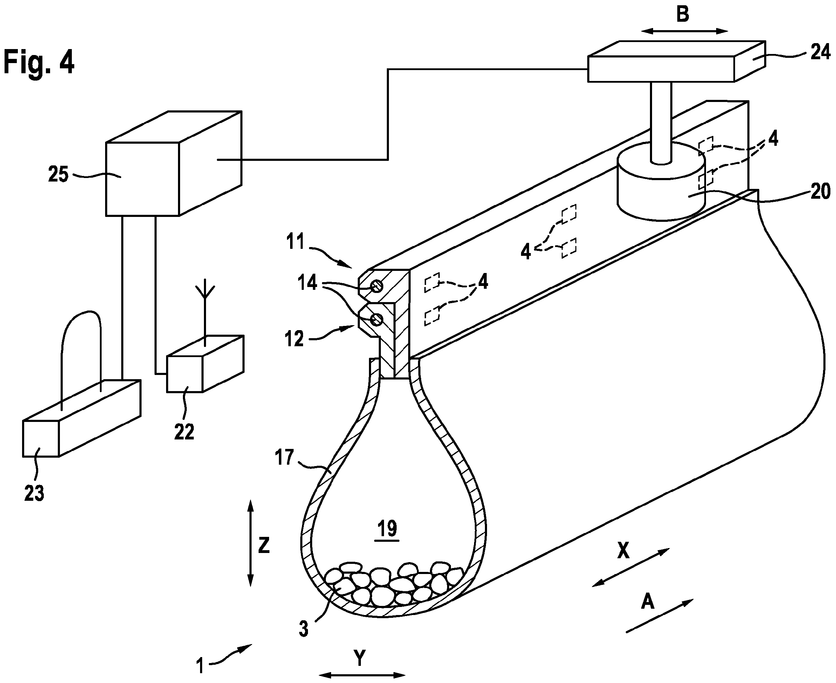

Innerhalb der Fördergurtkanten 11, 12 sind dabei mehrere Sensorelemente 4 jeweils paarweise über die Längsrichtung X gleichmäßig verteilt angeordnet, vgl. Figuren 3 und 4, so dass die Temperatur und der Druck an mehreren Stellen erfasst und berücksichtigt werden können.

Um diese Temperatur-, Druck- und Identifikations-Kodierungs-Daten zuerst einmal erhalten und dann berücksichtigen zu können, weist die erfindungsgemäße Taschenfördergurtanlage 2 wenigstens eine kombinierte Sende-/Empfangseinheit 22 auf, welche stationär entlang des Taschenfördergurts 1 angeordnet ist, so dass von der Sende-/Empfangseinheit 22 Befehl an die Sensorelemente 4 des sich vorbeibewegenden Taschenfördergurts 1 Befehle gesendet und Temperatur-, Druck- und Identifikations-Kodierungs-Daten von diesen empfangen werden können. Ferner ist stationär entlang des Taschenfördergurts 1 wenigstens eine Energieübertragungseinheit 23 angeordnet, von welcher elektrische Energie z.B. mittels Induktion auf die Sensorelemente 4 des sich vorbeibewegenden Taschenfördergurts 1 übertragen werden kann.

Diese Temperatur-, Druck- und Identifikations-Kodierungs-Daten können einer Steuerungseinheit 25 der Taschenfördergurtanlage 2 übergeben werden, um wenigstens eine Rollenspanneinheit 24 in der Bewegungsrichtung B gegenüber den Förderkanten 11, 12 zu verstellen und hierdurch den Druck auf die Förderkanten 11, 12 zu regulieren. Hierdurch kann auch die Temperaturentstehung in den Förderkanten 11, 12 beeinflusst werden. Dabei ist vorzugsweise jede sich um die vertikale Richtung Z drehende Rolle 20 mittels einer eigenen Rollenspanneinheit 24 einstellbar, um diese Vorteile bei jedem Paar von Rollen 20 verwendet zu können.

### Bezugszeichenliste (Teil der Beschreibung)

- A: Bewegungsrichtung/Förderrichtung des Taschenfördergurts 1
- B: Bewegungsrichtung der Rollenspanneinheit 24
- X: Längsrichtung; Tiefe
- Y: Querrichtung; Breite
- Z: vertikale Richtung; Höhe

- 1: Taschenfördergurt; SICON-Fördergurt
- 10: Fördergurtkörper; Tasche; Bag
- 11: erste, obere Fördergurtkante
- 12: zweite, untere Fördergurtkante
- 13: Profile der Fördergurtkanten 11, 12
- 13a: Festigkeitsträger; Textilgewebelage
- 14: Zugträger; Stahlseile
- 15: Kontaktbereich/Fahne der ersten, oberen Fördergurtkante 11
- 16: Kontaktbereich/Fahne der zweiten, unteren Fördergurtkante 12
- 17: Taschenkörper
- 18: Tragseite des Taschenfördergurts 1; Innenseite des geschlossenen Taschenfördergurts 1
- 19: Innenraum des geschlossenen Taschenfördergurts 1

- 2: Taschenfördergurtanlage
- 20: (Spann-)Rollen
- 21: Anlagenteile
- 22: Daten-Sende-/Empfangseinheit
- 23: Energie-Übertragungseinheit
- 24: Rollenspanneinheit
- 25: Steuerungseinheit
- 3: Fördergut; Schüttgut

- 4: Sensorelement
- 40: Sensorkörper; Sensorelektronik; (RFID-)Transponder-Chip
- 41: Sensorantenne; Transponderantenne

## Patentansprüche

1. Taschenfördergurtanlage (2)
mit einem Taschenfördergurt (1) mit
einem Fördergurtkörper (10), vorzugsweise einem elastomeren Fördergurtkörper (10), welcher ausgebildet ist, ein Fördergut (3) im Innenraum (19) des geschlossenen Taschenfördergurts (1) aufzunehmen,
wobei der Fördergurtkörper (10) eine erste Fördergurtkante (11) und eine zweite Fördergurtkante (12) aufweist,
wobei der Fördergurtkörper (10) wenigstens ein Sensorelement (4) aufweist,
wobei das wenigstens eine Sensorelement (4) in der ersten Fördergurtkante (11) und/oder in der zweiten Fördergurtkante (12) angeordnet ist,
wobei der Fördergurtkörper (10) ein Elastomermaterial aufweist oder aus einem Elastomermaterial besteht, in welches zumindest abschnittsweise im Bereich der ersten Fördergurtkante (11) und/oder der zweiten Fördergurtkante (12) ein Festigkeitsträger (13a) und/oder ein Zugträger (11) eingebettet ist,
wobei das wenigstens eine Sensorelement (4) zwischen dem Festigkeitsträger (13a) und/oder zwischen dem Zugträger (11) und einer Außenseite der Fördergurtkante (11, 12) angeordnet ist, welche einer Rolle (20) der Taschenfördergurtanlage (2) zugewandt ist,
mit einer Mehrzahl von Rollen (20) zur Führung des Taschenfördergurts (1),
mit wenigstens einer Sendeeinheit (22), welche ausgebildet ist, Daten drahtlos an wenigstens das Sensorelement (4) des Taschenfördergurts (1) zu senden, und/oder mit wenigstens einer Empfangseinheit (22), welche ausgebildet ist, Daten drahtlos von wenigstens dem Sensorelement (4) des Taschenfördergurts (1) zu empfangen, **dadurch gekennzeichnet, dass**
das wenigstens eine Sensorelement (4) ausgebildet ist, wenigstens die Temperatur des Fördergurtkörpers (10) an der Stelle des Sensorelements (4) zu erfassen, wobei
wenigstens eine Rolle (20), vorzugsweise eine Mehrzahl von Rollen (20), eine Rollenspanneinheit (24) aufweist, welche ausgebildet ist, wenigstens eine Rolle (20) in einer Bewegungsrichtung (B) der Rollenspanneinheit (24) gegenüber dem Taschenfördergurt (1) zu bewegen und hierdurch auf den Taschenfördergurt (1) zu drücken,
wobei die Taschenfördergurtanlage (2) ausgebildet ist, den Druck der Rollenspanneinheit (24) auf den Taschenfördergurt (1)
in Abhängigkeit einer Temperatur und/oder
in Abhängigkeit eines Drucks und/oder
in Abhängigkeit einer Identifikations-Kodierung
des wenigstens einen Sensorelements (4) des Taschenfördergurts (1) zu steuern und/oder zu regeln.

2. Taschenfördergurtanlage (2) nach Anspruch 1, **dadurch gekennzeichnet, dass** die erste Fördergurtkante (11) und/oder die zweite Fördergurtkante (12) ein Profil (13) aufweist, welches zur Führung zwischen den Rollen (20) der Taschenfördergurtanlage (2) ausgebildet ist, wobei wenigstens ein Sensorelement (4) in der ersten Fördergurtkante (11) und/oder in der zweiten Fördergurtkante (12) auf der Höhe (Z) des Profils (13) angeordnet ist.

3. Taschenfördergurtanlage (2) nach Anspruch 1 oder 2, **dadurch gekennzeichnet, dass**
der Fördergurtkörper (10) eine Mehrzahl von Sensorelementen (4) aufweist, welche in der Bewegungsrichtung (A) des Taschenfördergurts (1) zueinander, vorzugsweise gleichmäßig, beabstandet sind.

4. Taschenfördergurtanlage (2) nach einem der vorherigen Ansprüche, **dadurch gekennzeichnet, dass**
das Sensorelement (4) einen Transponder-Chip (40), vorzugsweise einen RFID-Transponder-Chip (40), aufweist oder als solcher ausgebildet ist,
wobei der Transponder-Chip (40) ausgebildet ist, Daten drahtlos von einer Sendeeinheit (22) einer Taschenfördergurtanlage (2) zu empfangen und/oder Daten drahtlos an eine Empfangseinheit (22) einer Taschenfördergurtanlage (2) zu senden.

5. Taschenfördergurtanlage (2) nach einem der vorherigen Ansprüche, **dadurch gekennzeichnet, dass**
das Sensorelement (4) ausgebildet ist, elektrische Energie drahtlos von einer Energie-Übertragungseinheit (23) einer Taschenfördergurtanlage (2) zu erhalten, und/oder das Sensorelement (4) einen, vorzugsweise aufladbaren, elektrischen Energiespeicher aufweist, und/oder
das Sensorelement (4) ausgebildet ist, elektrische Energie, vorzugsweise piezoelektrisch, zu erzeugen.

6. Taschenfördergurtanlage (2) nach einem der vorherigen Ansprüche, **dadurch gekennzeichnet, dass**
der Fördergurtköper (10) zumindest im Bereich wenigstens eines Sensorelements (4) zumindest abschnittsweise einen textilen Festigkeitsträger (13a), vorzugsweise einen gewobenen textilen Festigkeitsträger (13a) aufweist, und
das Sensorelement (4) eine Sensorantenne (41), vorzugsweise eine Transponderantenne (41), aufweist, welche zumindest abschnittsweise mit dem textilen Festigkeitsträger (13a) verbunden, vorzugsweise verwoben, ist.

7. Taschenfördergurtanlage (2) nach einem der vorherigen Ansprüche, **dadurch gekennzeichnet, dass**
das Sensorelement (4) ferner ausgebildet ist, den Druck des Fördergurtkörpers (10) an der Stelle des Sensorelements (4) zu erfassen.

8. Taschenfördergurtanlage (2) nach einem der vorherigen Ansprüche, **dadurch gekennzeichnet, dass**
das Sensorelement (4) ferner eine Identifikations-Kodierung aufweist, welche drahtlos von einer Fördergurtanlage (2), vorzugsweise drahtlos von einer Empfangseinheit (22) einer Fördergurtanlage (2), erfasst werden kann.

9. Taschenfördergurtanlage (2) nach einem der vorherigen Ansprüche, **dadurch gekennzeichnet, dass**
der Fördergurtkörper (10) eine Mehrzahl von Sensorelementen (4) aufweist, welche in der Bewegungsrichtung (A) des Taschenfördergurts (1) zueinander, vorzugsweise gleichmäßig, beabstandet sind,
wobei jedes Sensorelement (4) eine individuelle Identifikations-Kodierung aufweist, welche drahtlos von einer Taschenfördergurtanlage (2), vorzugsweise drahtlos von einer Empfangseinheit (22) einer Taschenfördergurtanlage (2), erfasst werden kann.

10. Taschenfördergurtanlage (2) nach einem der vorangehenden Ansprüche,
wobei die Taschenfördergurtanlage (2) eine kombinierte Sende-/Empfangseinheit (22) aufweist.

11. Taschenfördergurtanlage (2) nach einem der vorangehenden Ansprüche, ferner **gekennzeichnet durch**
wenigstens eine Energie-Übertragungseinheit (23), welche ausgebildet ist, elektrische Energie drahtlos an wenigstens ein Sensorelement (4) des Taschenfördergurts (1) zu übertragen.

12. Taschenfördergurtanlage (2) nach einem der vorangehenden Ansprüche, ferner **gekennzeichnet durch**
eine Mehrzahl von Sendeeinheiten (22), Empfangseinheiten (22), Sende-/Empfangseinheiten (22) und/oder Energie-Übertragungseinheiten (23), welche in der Förderrichtung (A) zueinander beabstandet angeordnet sind.

## Claims

1. Pouch conveyor belt system (2)
having a pouch conveyor belt (1) with
a conveyor belt body (10), preferably an elastomer conveyor belt body (10), which is designed to hold a conveyed material (3) in the interior (19) of the closed pouch conveyor belt (1),
wherein the conveyor belt body (10) has a first conveyor belt edge (11) and a second conveyor belt edge (12),
wherein the conveyor belt body (10) has at least one sensor element (4), wherein the at least one sensor element (4) is arranged in the first conveyor belt edge (11) and/or in the second conveyor belt edge (12),
wherein the conveyor belt body (10) has an elastomer material or consists of an elastomer material in which, at least in portions, a reinforcing member (13a) and/or a tension member (11) is embedded in the region of the first conveyor belt edge (11) and/or the second conveyor belt edge (12),
wherein the at least one sensor element (4) is arranged between the reinforcing member (13a) and/or between the tension member (11) and an outside of the conveyor belt edge (11, 12) which is configured to face a roller (20) of the pouch conveyor belt system (2),
having a plurality of rollers (20) for guiding the pouch conveyor belt (1),
having at least one transmitter unit (22) which is designed to transmit data wirelessly to at least the sensor element (4) of the pouch conveyor belt (1), and/or having at least one receiver unit (22), which is designed to receive data wirelessly from at least the sensor element (4) of the pouch conveyor belt (1),
**characterized in that**
the at least one sensor element (4) is designed to detect at least the temperature of the conveyor belt body (10) at the location of the sensor element (4), wherein at least one roller (20), preferably a plurality of rollers (20), has a roller tensioning unit (24), which is designed to move at least one roller (20) relative to the pouch conveyor belt (1) in a movement direction (B) of the roller tensioning unit (24) and as a result to press on the pouch conveyor belt (1),
wherein the pouch conveyor belt system (2) is designed to control and/or to regulate the pressure of the roller tensioning unit (24) on the pouch conveyor belt (1)
as a function of a temperature and/or
as a function of a pressure and/or
as a function of an identification code
of the at least one sensor element (4) of the pouch conveyor belt (1).

2. Pouch belt conveyor system (2) according to Claim 1, **characterized in that** the first conveyor belt edge (11) and/or the second conveyor belt edge (12) has a profile (13) which is designed to be guided between the rollers (20) of the pouch conveyor belt system (2),
wherein at least one sensor element (4) is arranged in the first conveyor belt edge (11) and/or in the second conveyor belt edge (12) at the height (Z) of the profile (13).

3. Pouch conveyor belt system (2) according to Claim 1 or 2, **characterized in that**
the conveyor belt body (10) has a plurality of sensor elements (4) which are spaced apart from one another, preferably uniformly, in the direction of movement (A) of the pouch conveyor belt (1).

4. Pouch conveyor belt system (2) according to one of the preceding claims, **characterized in that**
the sensor element (4) has or is formed as a transponder chip (40), preferably an RFID transponder chip (40),
wherein the transponder chip (40) is designed to receive data wirelessly from a transmitter unit (22) of a pouch conveyor belt system (2) and/or to transmit data wirelessly to a receiver unit (22) of a pouch conveyor belt system (2).

5. Pouch conveyor belt system (2) according to one of the preceding claims, **characterized in that**
the sensor element (4) is designed to receive electrical energy wirelessly from an energy transfer unit (23) of a pouch conveyor belt system (2), and/or
the sensor element (4) has a preferably chargeable electrical energy store, and/or the sensor element (4) is designed to generate electrical energy, preferably piezoelectrically.

6. Pouch conveyor belt system (2) according to one of the preceding claims,
**characterized in that**
the conveyor belt body (10) has a textile reinforcing member (13a), preferably a woven textile reinforcing member (13a), at least in portions at least in the region of at least one sensor element (4), and
the sensor element (4) has a sensor antenna (41), preferably a transponder antenna (41), which, at least in portions, is connected to, preferably woven into, the textile reinforcing member (13a).

7. Pouch conveyor belt system (2) according to one of the preceding claims,
**characterized in that**
the sensor element (4) is further designed to detect the pressure of the conveyor belt body (10) at the location of the sensor element (4).

8. Pouch conveyor belt system (2) according to one of the preceding claims, **characterized in that** the sensor element (4) further has an identification code which can be detected wirelessly by a conveyor belt system (2), preferably wirelessly by a receiver unit (22) of a conveyor belt system (2).

9. Pouch conveyor belt system (2) according to one of the preceding claims, **characterized in that**
the conveyor belt body (10) has a plurality of sensor elements (4) which are spaced apart from one another, preferably uniformly, in the direction of movement (A) of the pouch conveyor belt (1),
wherein each sensor element (4) has an individual identification code which can be detected wirelessly by a pouch conveyor belt system (2), preferably wirelessly by a receiver unit (22) of a pouch conveyor belt system (2).

10. Pouch conveyor belt system (2) according to one of the preceding claims, wherein the pouch conveyor belt system (2) has a combined transmitter/receiver unit (22).

11. Pouch conveyor belt system (2) according to one of the preceding claims, further **characterized by**
at least one energy transfer unit (23), which is designed to transfer electrical energy wirelessly to at least one sensor element (4) of the pouch conveyor belt (1).

12. Pouch conveyor belt system (2) according to one of the preceding claims, further **characterized by**
a plurality of transmitter units (22), receiver units (22), transmitter/receiver units (22) and/or energy transfer units (23), which are arranged so as to be spaced apart from one another in the conveying direction (A).

## Revendications

1. Système formant bande transporteuse à poches (2) comprenant
une bande transporteuse à poches (1) qui comporte
un corps de bande transporteuse (10), de préférence un corps de bande transporteuse (10) en élastomère, qui est conçu pour recevoir un article à transporter (3) dans l'espace intérieur (19) de la bande transporteuse à poches (1) fermée,
le corps de bande transporteuse (10) comportant un premier bord de bande transporteuse (11) et un deuxième bord de bande transporteuse (12),
le corps de bande transporteuse (10) comportant au moins un élément formant capteur (4),
l'au moins un élément formant capteur (4) étant disposé dans le premier bord de bande transporteuse (11) et/ou dans le deuxième bord de bande transporteuse (12),
le corps de bande transporteuse (10) comportant un matériau élastomère ou étant en matériau élastomère dans lequel un renfort (13a) et/ou un élément de tension (11) sont noyés au moins par portions dans la zone du premier bord de bande transporteuse (11) et/ou du deuxième bord de bande transporteuse (12),
l'au moins un élément formant capteur (4) étant disposé entre le renfort (13a) et/ou entre l'élément de tension (11) et un côté extérieur du bord de bande transporteuse (11, 12) qui est dirigé vers un rouleau (20) du système formant bande transporteuse à poches (2),
une pluralité de rouleaux (20) destinés à guider la bande transporteuse à poches (1),
au moins une unité d'émission (22) qui est conçue pour envoyer des données sans fil au moins à l'élément formant capteur (4) de la bande transporteuse à poches (1), et/ou
au moins une unité de réception (22) qui est conçue pour recevoir des données sans fil en provenance d'au moins l'élément formant capteur (4) de la bande transporteuse à poches (1),
**caractérisé en ce que**
l'au moins un élément formant capteur (4) est conçu pour détecter au moins la température du corps de bande transporteuse (10) à l'emplacement de l'élément formant capteur (4), au moins un rouleau (20), de préférence une pluralité de rouleaux (20), une unité de tension de rouleaux (24) qui est conçue pour déplacer au moins un rouleau (20) dans un sens de déplacement (B) de l'unité de tension de rouleaux (24) par rapport à la bande transporteuse à poches (1) et le presser ainsi sur la bande transporteuse de poches (1),
le système formant bande transporteuse à poches (2) étant conçu pour commander et/ou réguler la pression de l'unité de tension de rouleaux (24) sur la bande transporteuse à poches (1)
en fonction d'une température et/ou
en fonction d'une pression et/ou
en fonction d'un code d'identification de l'au moins un élément formant capteur (4) de la bande transporteuse à poches (1).

2. Système formant bande transporteuse à poches (2) selon la revendication 1, **caractérisé en ce que**
le premier bord de bande transporteuse (11) et/ou le deuxième bord de bande transporteuse (12) comporte un profilé (13) qui est conçu pour guider entre les rouleaux (20) du système formant bande transporteuse à poches (2),
au moins un élément formant capteur (4) étant disposé dans le premier bord de bande transporteuse (11) et/ou dans le deuxième bord de bande transporteuse (12) à la hauteur (Z) du profilé (13).

3. Système formant bande transporteuse à poches (2) selon la revendication 1 ou 2, **caractérisé en ce que**
le corps de bande transporteuse (10) comporte une pluralité d'éléments formant capteurs (4) qui sont espacés les uns des autres, de préférence régulièrement, dans le sens de déplacement (A) de la bande transporteuse à poches (1).

4. Système formant bande transporteuse à poches (2) selon l'une des revendications précédentes, **caractérisé en ce que**
l'élément formant capteur (4) comporte, ou est conçu comme, une puce formant transpondeur (40), de préférence une puce formant transpondeur RF1D (40), la puce formant transpondeur (40) étant conçue pour recevoir des données sans fil en provenance d'une unité d'émission (22) d'un système formant bande transporteuse à poches (2) et/ou pour envoyer des données sans fil à une unité de réception (22) d'un système formant bande transporteuse à poches (2).

5. Système formant bande transporteuse à poches (2) selon l'une des revendications précédentes, **caractérisé en ce que**
l'élément formant capteur (4) est conçu pour recevoir de l'énergie électrique sans fil en provenance d'une unité de transmission d'énergie (23) d'un système formant bande transporteuse à poches (2) et/ou l'élément formant capteur (4) comporte un accumulateur d'énergie électrique, de préférence rechargeable, et/ou l'élément formant capteur (4) est conçu pour générer de l'énergie électrique, de préférence par des moyens piézoélectriques.

6. Système formant bande transporteuse à poches (2) selon l'une des revendications précédentes, **caractérisé en ce que**
le corps de bande transporteuse (10) comporte un renfort textile (13a), de préférence un renfort textile tissée (13a), au moins dans la zone d'au moins un élément formant capteur (4), et
l'élément formant capteur (4) comportant une antenne de capteur (41), de préférence une antenne de transpondeur (41), qui est reliée, de préférence tissée, au moins par portions au renfort textile (13a).

7. Système formant bande transporteuse à poches (2) selon l'une des revendications précédentes, **caractérisé en ce que**
l'élément formant capteur (4) est en outre conçu pour détecter la pression du corps de bande transporteuse (10) à l'emplacement de l'élément formant capteur (4).

8. Système formant bande transporteuse à poches (2) selon l'une des revendications précédentes, **caractérisé en ce que**
l'élément formant capteur (4) comporte également un code d'identification qui peut être détecté sans fil par un système à bande transporteuse (2), de préférence sans fil par une unité de réception (22) d'un système formant bande transporteuse (2).

9. Système formant bande transporteuse à poches (2) selon l'une des revendications précédentes, **caractérisé en ce que**
le corps de bande transporteuse (10) comporte une pluralité d'éléments formant capteurs (4) qui sont espacés, de préférence régulièrement, dans le sens de déplacement (A) de la bande transporteuse à poches (1),
chaque élément formant capteur (4) comportant un code d'identification individuel qui peut être détecté sans fil par un système formant bande transporteuse à poches (2), de préférence sans fil par une unité de réception (22) d'un système formant bande transporteuse à poches (2).

10. Système formant bande transporteuse à poches (2) selon l'une des revendications précédentes,
le système formant bande transporteuse à poches (2) comportant une unité combinée d'émission/réception (22).

11. Système formant bande transporteuse à poches (2) selon l'une des revendications précédentes, **caractérisé en outre par**
au moins une unité de transmission d'énergie (23) qui est conçue pour transmettre de l'énergie électrique sans fil à au moins un élément formant capteur (4) de la bande transporteuse à poches (1).

12. Système formant bande transporteuse à poches (2) selon l'une des revendications précédentes, **caractérisé en outre par**
une pluralité d'unités d'émission (22), d'unités de réception (22), d'unités d'émission/réception (22) et/ou d'unités de transmission d'énergie (23) qui sont disposées à distance les unes des autres dans le sens de transport (A).
